# EUROPÄISCHE PATENTSCHRIFT

(11) **EP 2 771 659 B1**
(45) Veröffentlichungstag und Bekanntmachung des Hinweises auf die Patenterteilung: **26.02.2020**
(21) Anmeldenummer: 12743721.8
(22) Anmeldetag: 02.08.2012
(51) Int. Cl.: G01K 7/02

(54) **THERMOELEMENT**
THERMOCOUPLE
THERMOÉLÉMENT

(30) Priorität: 25.10.2011 DE 102011054803
(43) Veröffentlichungstag der Anmeldung: 03.09.2014
(73) Patentinhaber: GÜNTHER Heisskanaltechnik GmbH, 35066 Frankenberg (DE)
(72) Erfinder: SOMMER, Siegrid, 35099 Burgwald (DE); GÜNTHER, Herbert, 35108 Allendorf (DE); ZIMMERMANN, Frédéric, 35066 Frankenberg (DE); SOMMER, Stefan, 35099 Burgwald (DE)
(74) Vertreter: Patentanwälte Olbricht Buchhold Keulertz
(86) Internationale Anmeldenummer: PCT/EP2012/065202
(87) Internationale Veröffentlichungsnummer: WO 2013/060496

(56) Entgegenhaltungen:
- WO-A2-2008/101171
- DE-A1- 19 814 106
- DE-A1- 19 941 038
- DUBY S ET AL: "Printed thick-film thermocouple sensors", ELECTRONICS LETTERS, IEE STEVENAGE, GB, Bd. 41, Nr. 6, 17. März 2005 (2005-03-17), Seiten 312-314, XP006023651, ISSN: 0013-5194, DOI: 10.1049/EL:20057988

## Beschreibung

Die Erfindung betrifft ein Thermoelement zur Temperaturerfassung gemäß dem Oberbegriff von Anspruch 1 sowie eine Heißkanaldüse gemäß Anspruch 6.

Die Temperaturerfassung mittels Thermoelementen in technischen Vorrichtungen stellt häufig eine große Herausforderung dar. Zum einen soll das Thermoelement an einer bestimmten Stelle der Vorrichtung angeordnet sein, um die Temperatur an genau dieser Stelle exakt zu erfassen und um Temperaturänderungen in diesem Bereich der Vorrichtung möglichst zeitnah registrieren zu können. Zum anderen soll das Thermoelement möglichst wenig Raum in Anspruch nehmen, der entweder nicht vorhanden ist oder für andere technische Einrichtungen benötigt wird.

Die Messung von Temperaturdifferenzen mittels Thermoelementen ist allgemein bekannt. Ein solches Thermoelement hat gewöhnlich zwei elektrische Leiter aus unterschiedlichen metallischen Legierungen oder Metallen, die an einer Messstelle in Kontakt gebracht werden. Die Messung der Temperatur beruht auf der Messung einer Thermospannung. Diese entsteht durch die Umwandlung von thermischer Energie in elektrische Energie aufgrund von Temperaturdifferenzen an der Messstelle gemäß dem Seebeck-Effekt. Thermoelemente werden bevorzugt in Sensoren oder Temperaturmessfühlern eingesetzt und entsprechen derzeit üblicherweise einem Standard nach DIN IEC 584.

WO 2008/101172 A2 und DUBY S ET AL: "Printed thick-film thermocouple sensors",ELECTRONICS LETTERS, IEE STEVENAGE, GB, Bd. 41, Nr. 6, 17. März 2005 (2005-03-17), Seiten 312-314, XP006023651,ISSN: 0013-5194, DOI: 10.1049/EL20057988 beschreiben jeweils ein Thermoelement, bei dem sich zwei in Dickschichttechnologie hergestellte Leiter in einer Messstelle überlappen.

DE 199 41 038 A1 betrifft eine Heißkanaldüse mit einer Heizvorrichtung. Die Heizvorrichtung weist in Dickschichttechnologie hergestellte Widerstandsbahnen auf einem Trägersubstrat auf. Die Widerstandsbahnen geben bei angeschlossener Stromquelle Wärme ab.

DE 198 14 106 A1 offenbart einen Träger, auf dem ein Thermopaar und ein Heizer mittels eines Dickfilmprozesses aufgebracht wird.

DE 10 2005 009 927 A1 offenbart ein sogenanntes Mantelthermoelement. Dessen metallische Leiter befinden sich in einer Schutzhülle, die gewöhnlich aus Edelstahl besteht, wobei die beiden Leiter mittels einer Füllung aus Magnesium- oder Aluminiumoxid elektrisch isoliert sind. Von Nachteil hierbei ist, dass die Thermoelemente sehr empfindlich gegen Verbiegen und Verknicken sind. Letzteres kann gegebenenfalls sogar zur Funktionsunfähigkeit führen. Der Platzbedarf derartiger Thermoelemente kann zwar relativ gering sein, wenn diese zu Drähten mit Durchmessern von bis zu 0,5 mm Dicke gezogen werden. Je dünner ein solches Mantelthermoelement ist, desto geringer ist jedoch die mechanische Stabilität, so dass die Gefahr einer mechanischen Verformung und damit eines Defektes steigt. Größere Durchmesser der Mantelthermoelemente führen hingegen zu einer größeren thermischen Masse und bedingen dadurch eine trägere oder längere Ansprechzeit, so dass Temperaturänderungen nur verzögert erfasst werden können.

Ziel der Erfindung ist es, diese und weitere Nachteile des Standes der Technik zu vermeiden und ein Thermoelement zu schaffen, das bei geringem Platzbedarf eine exakte und stets zuverlässige Erfassung einer Temperaturdifferenz oder einer Temperatur ermöglicht und bei kostengünstigem Aufbau eine hohe mechanische Stabilität aufweist. Angestrebt wird ferner ein einfaches und kostengünstiges Verfahren zur Herstellung eines solchen Thermoelements, das auf unterschiedliche Materialien aufbringbar sein soll. Das Thermoelement soll überdies einen möglichst großen Temperaturbereich abdecken und im nutzbaren Temperaturbereich eine möglichst große Spannungsdifferenz bei möglichst minimalen Temperaturänderungen erfassen können.

Hauptmerkmale der Erfindung sind im kennzeichnenden Teil von Anspruch 1 und in Anspruch 6 angegeben. Ausgestaltungen sind Gegenstand der Ansprüche 2 bis 5 und 7 bis 10.

Bei einem Thermoelement zur Erfassung der Temperatur an einer Messstelle, mit einem ersten Leiter, der ein erstes Ende und ein erstes Anschlussende aufweist, und mit einem zweiten Leiter, der ein zweites Ende und ein zweites Anschlussende aufweist, wobei das erste Ende des ersten Leiters und das zweite Ende des zweiten Leiters an der Messstelle elektrisch miteinander kontaktiert sind, und wobei das erste Anschlussende des ersten Leiters und das zweite Anschlussende des zweiten Leiters jeweils mit einer Anschlussleitung verbindbar ist, sieht die Erfindung vor, dass der erste Leiter und der zweite Leiter in Dickschichttechnik auf einem Substrat aufgebracht sind, wobei sich das erste Ende des ersten Leiters und das zweite Ende des zweiten Leiters an der Messstelle berühren oder zumindest abschnittsweise überlappen.

Ein solches Thermoelement hat aufgrund der in Dickschichttechnik auf dem Substrat aufgebrachten Leitern einen äußerst geringen Platzbedarf, weil die Schichtdicke der Leiter nur wenige Mikrometer beträgt. Die Abmessungen des Thermoelements werden daher maßgeblich von dem Substrat selbst vorgegeben, d.h. dessen Abmessungen werden durch das Aufbringen der Leiter in Dickschichttechnik nur unwesentlich verändert, so dass kein zusätzlicher Platzbedarf besteht. Zudem weist das Thermoelement durch das Substrat eine hohe Stabilität auf, weil die auf dem Substrat aufgebrachten Leiter selbst unter großen Belastungen nicht beschädigt werden können.

Die Leiter lassen sich in Dickschichttechnik präzise und kostengünstig auf dem Substrat aufbringen, was sich zum einen günstig auf die Herstellkosten auswirkt und zum anderen eine hohe Messgenauigkeit gewährleistet. Das erfindungsgemäße Thermoelement weist insbesondere durch seine geringe Masse extrem kurze Ansprechzeiten auf, wodurch Temperaturen direkt vor Ort und in Echtzeit ermittelt werden können. Selbst geringfügige Temperaturschwankungen sind nahezu verzögerungsfrei detektierbar. Das Thermoelement deckt folglich mit den in Dickschichttechnik ausgebildeten Leitern einen relativ großen Temperaturbereich ab, wobei innerhalb nutzbarer Temperaturbereiche bei minimalen Temperaturänderungen eine große Spannungsdifferenz erzeugt wird.

Die Ausgestaltung der Leiter auf dem Substrat in Dickschichttechnik ermöglicht ferner, die exakte Ausbildung eines Messpunktes, so dass die Möglichkeit besteht, die Temperatur an einem genau zu definierenden Punkt bestimmen zu können, wobei reproduzierbare und genaue Messergebnisse verzögerungsfrei geliefert werden. Weiterhin ist das erfindungsgemäße Thermoelement ohne hohen Materialverbrauch einfach und kostengünstig herstellbar.

Die minimalen Abmessungen des erfindungsgemäßen Thermoelements ermöglichen eine platzsparende, genaue und punktuelle Messung der Temperatur in einem weiten Temperaturbereich. Damit bieten sich zahlreiche Einsatzbereiche an. Beispielsweise können die Thermoelemente in der Kunststoffverarbeitung, speziell in Heißkanalsystemen bei Temperaturen zwischen Raumtemperatur und 500 °C verwendet werden, indem das Thermoelement direkt auf die Heizung einer Heißkanaldüse oder auf dessen Materialrohr aufgebracht wird. Anwendungen im tiefen Temperaturbereich bis -200 °C und kleiner und weit über 500 °C sind jedoch für das erfindungsgemäße Thermoelement ebenso möglich.

Erfindungsgemäß ist außerdem vorgesehen, dass der erste Leiter einen positiven Kontakt bildet und aus einer Legierung bestehend aus 80 bis 95 % Ni, 3 bis 20 % Cr, 0 bis 1 % Fe und 0 bis 1 % Si gefertigt ist. Eine Zusammensetzung der oben genannten Legierungen ist auch unter dem Markennamen Chromel® oder ISATHERM PLUS® bekannt. Weiterhin ist erfindungsgemäß vorgesehen, dass der zweite Leiter einen negativen Kontakt bildet und aus einer Legierung bestehend aus 40 bis 58 % Cu, 40 bis 50 % Ni, 1 bis 5 % Mn und 1 bis 5 % Fe gefertigt ist. Eine Zusammensetzung aus diesen Legierungen ist unter dem Markennamen ISA MINUS® bekannt.

Mit diesen Legierungen werden konstante und reproduzierbare Temperaturmessungen und die Ausgabe eines DIN-konformen Messsignals ermöglicht. Dadurch werden die erhaltenen Messwerte mit anderen genormten Temperaturfühlern vergleichbar. Dies ist insoweit von Bedeutung, da die unterschiedlichen standardisierten Thermoelemente sich aufgrund ihrer unterschiedlichen Kontaktmaterialien in der maximal erzeugbaren Thermospannung und somit in ihrem kritischen Temperaturbereich unterscheiden. Dieser ist charakteristisch für die einzelnen Thermoelemente und stellt den Bereich dar, in welchem die Thermoelemente stabile Thermospannungen liefern, ohne dass die Kontaktmaterialien aufgrund der Hitze beschädigt werden und eine reproduzierbare Thermospannung so verhindert würde.

Vorzugsweise sind die erste Anschlussleitung des ersten Leiters und die zweite Anschlussleitung des zweiten Leiters aus dem gleichen Material gefertigt, wie die jeweiligen Leiter. Dies gewährleistet ein stabiles Messsignal.

Eine weitere Ausführungsform der Erfindung sieht vor, dass zwischen einem elektrisch leitenden Substrat und den Leitern eine elektrische Isolierschicht angeordnet ist. Diese ermöglicht einen schichtweisen Aufbau des Thermoelements auf einem metallischen Substrat, ohne dass eine Störung des Thermoelements oder der Spannungsänderung stattfinden kann, indem der Strom über das metallische Substrat abfließen kann. Von besonderem Vorteil ist es, wenn die Isolierschicht eine Dielektrikumsschicht ist. Eine solche lässt sich einfach und kostengünstig in Dickschichttechnik realisieren.

Ein weiterer Vorteil ergibt sich, wenn über den Leitern und der Isolierschicht zumindest abschnittsweise eine Abdeckschicht aufgebracht ist, wodurch die Leiter vor äußeren Umwelteinflüssen, vor Beschädigung wie Verkratzen oder Oxidation geschützt werden. Zweckmäßig besteht auch die Abdeckschicht aus einem Dielektrikum.

Ferner ist es möglich, durch Überlappung der Kontakte des Thermoelements über die Dielektrikumsschicht eine leitende Verbindung der Kontakte des Thermofühlers mit dem Substrat zu ermöglichen um dadurch eine elektrische Erdung des Thermoelements zu erreichen.

Das Thermoelement ist auf einem Substrat angebracht. Erfindungsgemäß ist das Substrat aus einem wärmeleitfähigen Material gefertigt, damit die zu erfassende Temperaturänderung weitestgehend ohne Verzögerung weitergeleitet wird und die Temperaturänderung von dem Thermoelement rasch und präzise ermittelt werden kann. Bei dieser Gestaltung ist das Substrat ein Trägerelement für das Thermoelement. Dadurch erhält das Thermoelement die gleiche Stabilität, wie das Substrat.

Weiterhin ist erfindungsgemäß vorgesehen, dass auf dem Substrat eine Heizung in Dickschichttechnologie aufgebracht ist. Damit wird die Heizung mit der gleichen Technologie aufgebracht wie das Thermoelement, wodurch die gleichen Produktionsschritte verwendet werden können. Dadurch reduzieren sich sowohl der Zeitaufwand als auch die Herstellungskosten, nicht zuletzt weil standardisierte Produktionsschritte aus der Dickschichttechnologie verwendet werden können.

In einer andere Ausgestaltung der Erfindung ist das Substrat zumindest ein Teil einer Heißkanaldüse, indem die Leiter des Thermoelements auf der Düse oder auf deren Heizung aufgebracht werden. Dadurch wird es ermöglicht, eine Heißkanaldüse direkt mit einem Thermoelement zu versehen, womit die Temperatur an einem exakt definierten Punkt auf der Heißkanaldüse ohne jegliche Messverzögerung detektiert werden kann. Das Substrat des Thermoelements bildet in diesen Fällen entweder die Heißkanaldüse selbst oder deren Heizung. Durch das Aufbringen der Leiter des Thermoelements in Dickschichttechnik werden die Abmessungen der Heißkanaldüse oder deren Heizung nicht merklich verändert, so dass das Thermoelement selbst keinen nennenswerten Raum einnimmt. Darüber hinaus gewährleisten die in Dickschichttechnik aufgebrachten Leiter eine schnelle und exakte Temperaturbestimmung an einem genau definierten Messpunkt auf der Heißkanaldüse bzw. auf deren Heizung.

Dementsprechend kann in einer Weiterbildung der Erfindung das Substrat des erfindungsgemäßen Thermoelements ein Materialrohr der Heißkanaldüse sein, welches das aufgeschmolzene Material zur Austrittsöffnung der Heißkanaldüse befördert. Das Materialrohr dient mithin der Zuführung des zu verarbeitenden Materials in ein Formnest, wobei es von besonderer Bedeutung, das Material innerhalb des gesamten Materialrohrs auf einer konstanten Temperatur zu halten. Diese kann mit dem erfindungsgemäßen Thermoelement exakt und ohne großen Platzbedarf ermittelt werden.

Entsprechend einer weiteren Ausgestaltung der Erfindung ist das Substrat des Thermoelements eine Heizung oder ein Heizelement der Heißkanaldüse. Bei diesem Aufbau wird das Thermoelement in Dickschichttechnik direkt unter oder über der Heizung der Heißkanaldüse aufgebracht. Dadurch ist es möglich, an definierten Stellen unmittelbar die Temperatur der Heizung oder deren Umgebung zu erfassen, um beispielsweise die Heizleistung der Heizung exakt bestimmen und regeln zu können. Darüber hinaus ist es möglich, die Temperatur unmittelbar an der Heizung zu ermitteln, um diese dadurch direkt und präzise regeln zu können. Dabei ist es von Vorteil, wenn die Leiter des Thermoelements direkt auf den Heizleitern oder den Heizleiterbahnen ausgebildet sind. Letztere können gleichfalls in Dickschichttechnik ausgebildet sein, was sich günstig auf die Bauhöhe der Heizung auswirkt, die weder durch die Heizleiterbahnen noch durch die Leiter des Thermoelements wesentlich verändert wird. Auf diese Weise lassen sich die Vorteile der Dickschichtheizung mit dem in Dickschichttechnologie aufgebrachten Thermoelement vereinen. Die Herstellkosten lassen sich senken, weil das Thermoelement mit der gleichen Technologie aufgebracht wird. Weiterhin ist eine Miniaturisierung der Heißkanaldüse möglich, weil sowohl die Dickschichtheizung als auch das Thermoelement einen nur geringen Platzbedarf aufweisen und keine zusätzliche Baugruppe erforderlich ist. Auch das ansonsten übliche Anschweißen eines zusätzlichen Drahtfühlers zur Temperaturbestimmung entfällt, weil das Thermoelement direkt auf der Heißkanaldüse und/oder auf deren Heizung aufgebracht ist.

Konstruktiv ist es günstig, wenn die Leiter des Thermoelements und die Widerstandsbahnen durch mechanische Schlitze oder Nuten voneinander getrennt sind. Dadurch wird eine zuverlässige thermische und elektrische Trennung des Thermoelements von den aktiven Widerstandsbahnen erreicht. Es wird somit ermöglicht, die Temperatur in direkter Nähe der Heizung zu erfassen, ohne dabei die Temperatur direkt an, auf oder unter der Heizung zu messen, was für zahlreiche Anwendungen wichtig sein kann. Das Einbringen der Schlitze oder Nuten lässt sich mit einfachen Mitteln kostengünstig realisieren und hat keinen Einfluss auf den Platzbedarf des Thermoelements.

Als besonders vorteilhafte Ausgestaltung der Erfindung hat sich ein Thermoelement erwiesen, bei dem der erste Leiter aus einer Legierung bestehend aus 89,1 % Ni, 10 %Cr, 0,5 % Si und 0,4 % Fe gefertigt ist und bei dem der zweite Leiter aus einer Legierung bestehend aus 51 % Cu, 45 % Ni, 2 % Mn und 2 % Fe gefertigt ist. Das Rohmaterial, welches für den ersten Leiter benutzt wurde, ist unter dem Markennamen ISATHERM PLUS® erhältlich und wurde von der Isabellenhütte Heusler GmbH & Co KG, Dillenburg, Germany bezogen, ebenso wie das Rohmaterial für den zweiten Leiter, welches unter dem Markennamen ISA MINUS® erhältlich ist. Die chemische Zusammensetzung der Legierungen ist in Massenanteilen (Massenprozent) des jeweiligen Elements angegeben.

Weiterhin sind auch Materialkombinationen der Legierungen ISA MINUS® mit ISA PLUS®, ISATHERM MINUS® mit ISATHERM PLUS® und ISATHERM MINUS® mit ISA PLUS® möglich, die ebenfalls von der Isabellenhütte Heusler GmbH & Co KG, Dillenburg, Germany bezogen wurden.

Die Erfindung sieht ferner eine Heißkanaldüse mit einer Heizung vor, auf der ein erfindungsgemäßes Thermoelement angeordnet oder aufgebracht ist. Gerade bei einer Heißkanaldüse ist es wichtig, die Temperatur des zu verarbeitenden Materials genau bestimmen zu können, um eine optimale Verarbeitung der zu verarbeitenden Masse gewährleisten zu können. Bei dem erfindungsgemäßen Aufbau einer Heißkanaldüse kann das Thermoelement zur Bestimmung der Temperatur an einem genau definierten Messpunkt, bevorzugt an der Spitze der Heißkanaldüse, äußerst platzsparend angebracht werden. Dies ermöglicht eine exakte Überwachung und Regelung der Temperatur.

Weil das erfindungsgemäße Thermoelement eine sehr schnelle Ansprechzeit hat, ist es möglich, Temperaturänderungen an der Heißkanaldüse in Echtzeit zu ermitteln. Dadurch kann eine optimale Verarbeitungstemperatur des Materials innerhalb der Heißkanaldüse gewährleistet werden, was sich äußerst günstig auf die Produktionsbedingungen auswirkt. Auch die Temperaturerfassung in der Nähe der Heizung stellt eine bevorzugte Bauart der Erfindung dar, weil somit die Leistung der Heizung exakt über die tatsächlich herrschende Temperatur geregelt werden kann, wobei die Temperatur von dem erfindungsgemäßen Thermoelement ermittelt wird.

Dazu sieht die Erfindung weiter vor, dass die Heizung eine Dickschichtheizung mit Widerstandsbahnen ist, wobei das Thermoelement über den Widerstandsbahnen, unter den Widerstandsbahnen oder in der gleichen Ebene wie die Widerstandsbahnen angeordnet ist. Dies ermöglicht zahlreiche Ausgestaltungen der Heißkanaldüse, die problemlos an unterschiedliche Einsatzbedingungen angepasst werden kann. Die Widerstandsbahnen der Dickschichtheizung und die Leiter des Thermoelements lassen sich gleichzeitig oder in einer bestimmten Reihenfolge nacheinander bzw. voreinander aufbringen, was sich günstig auf das spätere Verhalten des Thermoelements auswirkt, insbesondere wenn letzteres vor den Widerstandsbahnen der Dickschichtheizung auf dem Substrat aufgebracht wird.

Eine zwischen der Heizung und dem Thermoelement vorgesehene Isolierschicht verhindert eine verfälschte Temperaturerfassung durch Spannungsverschiebungen, die durch die elektrische Heizung und unterschiedliche Heizleistungen der Heizung möglich sind.

Eine über der Heizung vorgesehene Abdeckschicht schützt sowohl das Thermoelement als auch die Heizung der Heißkanaldüse vor Beschädigungen oder äußeren Umwelteinflüssen wie Verkratzen, Korrosion oder Oxidation. Zudem wirkt die Abdeckschicht als thermische Isolierung gegenüber der Umgebung.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: ein schematischer Teil-Querschnitt eines Thermoelements;
- Fig. 2: eine schematische Darstellung des Aufbaus eines Thermoelements, das über Anschlussleitungen mit einem Regelgerät verbunden ist;
- Fig. 3: ein schematischer Teil-Querschnitt einer anderen Ausführungsform eines Thermoelements;
- Fig. 4: ein schematischer Teil-Querschnitt eines erfindungsgemäßen Thermoelements;
- Fig. 5: ein schematischer Teil-Querschnitt einer anderen Ausführungsform des erfindungsgemäßen Thermoelements; und
- Fig. 6: ein schematischer Teil-Querschnitt einer Heißkanaldüse mit einem erfindungsgemäßen Thermoelement.

Gleiche Bezugszeichen beziehen sich nachfolgend auf gleiche oder gleichartige Bauteile.

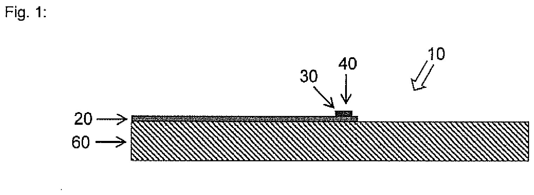

Das in Fig. 1 allgemein mit 10 bezeichnete Thermoelement ist für die Erfassung der Temperatur an einer Messstelle 40 vorgesehen. Es hat ein Substrat 60 als Trägerelement sowie zwei metallische Leiter 20, 30, die mittels Dickschichttechnik auf dem Substrat 60 aufgebracht sind, wobei sich die beiden Leiter 20, 30 an der Messstelle 40 zumindest abschnittsweise bzw. teilweise überlappen.

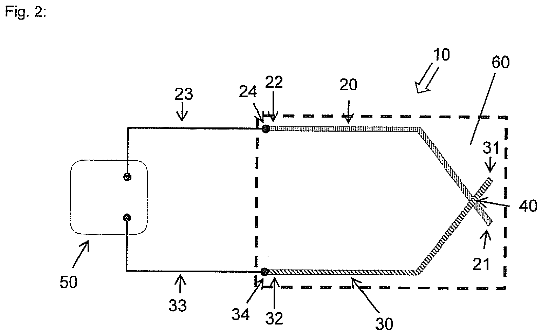

Der erste Leiter 20 hat - wie Fig. 2 zeigt - ein erstes Ende 21 und ein erstes Anschlussende 22, während der zweite Leiter 30 ein zweites Ende 31 und ein zweites Anschlussende 32 aufweist, wobei das erste Ende 21 des ersten Leiters 20 und das zweite Ende 31 des zweiten Leiters 30 an der Messstelle 40 elektrisch miteinander kontaktiert sind, indem die beiden Enden 21, 31 sich überlappen. Das erste Anschlussende 22 des ersten Leiters 20 und das zweite Anschlussende 32 des zweiten Leiters 30 sind hingegen mit je einer Anschlussleitung 23, 33 verbunden, die zu einem Regelgerät 50 führen, damit der für die Temperaturerfassung notwendige Stromkreis geschlossen ist.

Um mit dem Thermoelement 10 Temperaturen erfassen zu können, müssen die beiden Leiter 20, 30 aus unterschiedlichen metallischen Legierungen bestehen.

Der erste Leiter 20 besteht beispielsweise aus einer Legierung bestehend aus 80 bis 95 % Ni, 3 bis 20 % Cr, 0 bis 1 % Fe und 0 bis 1 % Si, die unter dem Markennamen ISATHERM PLUS® erhältlich ist. Der zweite Leiter 30 besteht aus einer Legierung bestehend aus 40 bis 58 % Cu, 40 bis 50 % Ni, 1 bis 5 % Mn und 1 bis 5 % Fe, die unter dem Markennamen ISA MINUS® erhältlich ist. Die Anschlussleitungen 23, 33 bestehen aus dem gleichen Material, wie die jeweils zugehörigen Leiter 20 bzw. 30.

Ändert sich die Temperatur des Substrats 60, so entsteht an der Messstelle 40, an der die beiden Leiter 20 und 30 die Überlappung bilden, eine elektrische Spannung, die mit dem Regelgerät 50, das über die Anschlussleitungen 23, 33 mit den Leitern 20, 30 in elektrischem Kontakt steht, gemessen werden kann.

Das erfindungsgemäße Thermoelement 10 erfasst konstante Spannungsänderungen, die proportional zur Temperaturänderung an der Messstelle 40 sind. Dadurch kann von der erfassten Spannungsänderung in der Messstelle 40 auf eine relative Änderung der Temperatur geschlossen werden. Erfasst man mit dem Regelgerät 50 zusätzlich die Umgebungstemperatur als Referenzwert, beispielsweise mit einem internen separaten Temperaturfühler, lässt sich zudem die absolute Temperaturänderung an der Messstelle 40 berechnen und es besteht die Möglichkeit, diese direkt anzuzeigen.

Damit das Thermoelement 10 einen nur minimalen Platzbedarf benötigt, sind die metallischen Leiter 20, 30 in Dickschichttechnik auf das Substrat 60 aufgebracht. Dadurch weisen die Leiter 20, 30 eine Dicke von nur wenigen Mikrometern auf, d.h. die eigentlichen Abmessungen des gesamten Thermoelements 10 werden im Wesentlichen von den Abmessungen des Substrats vorgegeben, welches für die metallischen Leiter einen stabilen Träger bildet, der das Thermoelement 10 vor Beschädigungen schützt und das Anbringen des Thermoelements 10 an ein zu vermessendes Objekt ermöglicht.

Die Herstellung der metallischen Leiter 20, 30 in Dickschichttechnik erfolgt beispielsweise mittels der Siebdrucktechnik. Dazu wird zunächst eine erste Siebdruckpaste für den ersten Leiter 20 aus ISATHERM PLUS® hergestellt und in einem definierten Bereich mittels Siebdruck auf das Substrat 60 aufgebracht. Anschließend wird eine zweite Siebdruckpaste für den zweiten Leiter 30 aus ISA MINUS® hergestellt und ebenfalls mittels Siebdruck in einem definierten Bereich auf dem Substrat 60 aufgetragen, wobei sich das erste Ende 21 des ersten Leiters 20 und das zweite Ende 31 des zweiten Leiters 30 an der Messstelle 40 zumindest abschnittsweise überlappen.

Zur Herstellung der Siebdruckpasten für die Leiter 20, 30 wird vorzugsweise zunächst ein Pulver hergestellt, wobei die jeweilige Legierung aufgeschmolzen und anschließend unter Zuleitung von Inertgas verdüst wird. Dabei bildet sich ein Pulver aus Metallpartikeln, aus welchem anschließend durch Zugabe eines Lösungsmittels die jeweilige Siebdruckpaste gebildet wird.

Diese Methode zum Erhalt der Siebdruckpasten ermöglicht es, kleine Metallpartikel mit einer homogenen Zusammensetzung und Verteilung zu erzeugen. Außerdem ist es mit dieser Methode möglich, eine relativ einheitliche Größenverteilung der einzelnen Metallpartikel zu erreichen. Darüber hinaus weisen verdüste Metallpartikel eine sphärische Konformation auf, wodurch sich ein gutes Fließverhalten im anschließenden Siebdruck und damit gute Siebdruckergebnisse erzielen lassen.

Die Partikelgröße des metallischen Pulvers sollte möglichst ähnlich sein und die Abweichungen idealerweise im Bereich von 25 % liegen. Je geringer die Partikelgröße, desto niedriger können Sintertemperaturen und -zeiten gewählt werden. Vorteilhaft sind daher Partikelgrößen von 5 Mikrometern. Einsetzbar sind aber problemlos auch Partikelgrößen zwischen 20 bis 25 µm.

Es sind auch andere Methoden für die Herstellung einer Siebdruckpaste vorstellbar wie z.B. das mechanische Zerkleinern der Legierungen z.B. durch einen Mahlvorgang.

Die Siebdruckpaste besteht mithin aus einem Gemisch aus einer funktionellen Komponente, namentlich der jeweiligen Legierung für den ersten oder zweiten Leiter 20, 30 sowie einem organischen Vehikel. Letzteres hat die Aufgabe der Siebdruckpaste die gewünschten rheologischen Eigenschaften zu verleihen. Es muss zusätzliche eine langzeitstabile, homogene Dispersion der funktionellen Komponente in der Siebdruckpaste gewährleisten.

Das Lösungsmittel ist bevorzugt ein organisches Lösungsmittel, wobei es sich um ein Gemisch aus einem Alkohol und einem Ester handelt, bevorzugt um ein Gemisch aus Ethanol und Essigsäureethylester. Diese Kombination bietet den Vorteil, dass es leicht flüchtig ist. Vorstellbar ist die Verwendung eines wässrigen Glykolgemisches als Lösungsmittel. Auch Terpineol kann als Verdünner eingesetzt werden.

Das Lösungsmittelgemisch wird nach dem Siebdruck der Metallpasten in einem nachfolgenden Trocknungsschritt aus der gedruckten Siebdruckpaste entfernt. Dieser Trocknungsschritt kann nach jedem Siebdruck der jeweiligen Siebdruckpaste erfolgen, oder aber nach beiden Druckschritten gemeinsam, bevorzugt jedoch vor dem Sintern, damit das organische Lösungsmittel verdampfen kann, bevor der Sinterprozess durchgeführt wird. Der Trocknungsvorgang kann bei Raumtemperatur oder beschleunigt bei Unterdruck oder erhöhter Temperatur, bevorzugt zwischen 50 und 250 °C durchgeführt werden. Das Trocknen unter einem Luftstrom ist ebenfalls durchführbar.

In einer vorteilhaften Ausgestaltung der Siebdruckpasten hat sich gezeigt, dass zusätzlich ein langkettiges Polymer zugemischt wird. Der Zusatz dieses langkettigen Polymers, beispielsweise Ethylzellulose ECT-10 0100 der Firma Hercules, zu dem Verdünner bzw. Lösungsmittel gewährleistet eine stets gute Dispersion der Metallpartikel innerhalb der Siebdruckpaste.

Nach dem Aufdrucken der einzelnen Siebdruckpasten für den ersten Leiter 20 und den zweiten Leiter 30 auf dem Substrat 60 und nach dem anschließenden Trocknen des gedruckten Musters, werden beide Leiter in einem nachfolgenden Prozessschritt bei einer definierten Temperatur für einen vorgegebenen Zeitraum gesintert bzw. eingebrannt.

Vorteilhafterweise wird das Sintern bei einer Temperatur von über 700 °C durchgeführt, bevorzugt bei einer Temperatur zwischen 750 °C und 900 °C, besonders bevorzugt bei einer Temperatur zwischen 800 °C und 875 °C. Wichtig hierbei ist, dass die Sintertemperatur so hoch liegt, dass die Metallpartikel sich zumindest teilweise miteinander verbinden und vorteilhafterweise auf dem Substrat 60 eingebrannt werden. Idealerweise wird das Sintern unter Schutzgas- oder Wasserstoffatmosphäre durchgeführt, weil die Siebdruckpasten, die aus den oben genannten Legierungen hergestellt sind, leicht oxidierbare Metalle wie z.B. Ni, Cu und Fe enthalten, die bei den zum Sintern verwendeten Temperaturen rasch zu den entsprechenden Oxiden oxidieren. Als Schutzgase sind Inertgase wie z.B. Argon oder Stickstoff verwendbar. Eingesetzt werden aber auch Wasserstoff oder Gasgemische wie Stickstoff-Wasserstoff-Gemische oder Luft-Schutzgas-Gemische. Mithin muss die Gasatmosphäre nicht notwendigerweise aus reinen Inertgasen oder reduktiven Gasen bestehen. Sie kann vielmehr auch Luftanteile enthalten.

Das Zeitfenster für den Sinterprozess beträgt mindestens 150 min. Bevorzugt wird über einen Zeitraum von 160 bis 200 min gesintert, besonders bevorzugt über einen Zeitraum von 170 bis 190 min, letzteres insbesondere dann, wenn die Sintertemperatur niedrig gehalten werden soll. Auf diese Weise wird das optimale Verschmelzen und Einbrennen der Siebdruckpaste auf das Substrat ermöglicht.

Insgesamt ist es möglich, beide Leiter 20, 30 gelichzeitig zu drucken und anschließend zu trocknen und einzubrennen. Alternativ ist es aber auch möglich, zunächst den ersten Leiter 20 aufzudrucken, zu trocknen und zu sintern und anschließend den zweiten Leiter 30 in gleicher Art und Weise auszuführen. Das getrennte Sintern hat den Vorteil, dass beide Leiter 20, 30 bei unterschiedlichen Temperaturen eingebrannt bzw. gesintert werden können.

Das Substrat 60 ist beispielsweise aus einer Keramik oder einem Metall gefertigt. Es muss im Wesentlichen die gewünschten mechanischen Eigenschaften haben, um für das Thermoelement einen stabilen und einfach zu handhabenden Träger zu bilden. Ferner muss es die für die Sinterprozesse notwendigen Temperaturen unbeschadet überstehen.

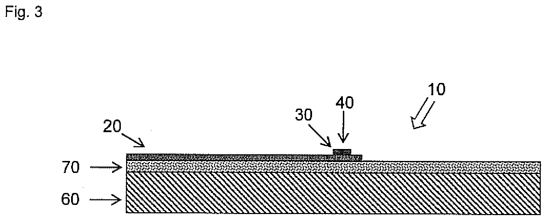

Fig. 3 zeigt schematisch den Querschnitt einer anderen Ausführungsform eines Thermoelements 10, das ebenfalls in einer schichtweisen Anordnung ein Substrat 60 sowie einen ersten Leiter 20 und einen zweiten Leiter 30 aufweist. Zwischen dem Substrat 60 und den Leitern 20, 30 befindet sich jedoch eine zusätzliche Isolierschicht 70, welche das Substrat 60 und die Leiter 20, 30 elektrisch voneinander trennt. Damit ist es möglich, das Substrat 60 aus einem elektrisch leitenden Material, beispielsweise einem Metall zu fertigen.

Das Substrat 60 bildet auch hier das Trägerelement für die schichtweise Anordnung der in Dickschichttechnik aufgebrachten metallischen Leiter 20, 30, wobei auch die Isolierschicht 70 in Dickschichttechnik aufgebracht wird. Bei der Isolierschicht 70 handelt es sich daher bevorzugt um eine Dielektrikumsschicht.

Bei der Herstellung des erfindungsgemäßen Thermoelements 10 wird zuerst die Isolierschicht 70 in Dickschichttechnik auf das metallische Substrat 60 aufgebracht, getrocknet und in einem anschließenden Sinterprozess eingebrannt. Anschließend werden - wie oben bereits beschrieben - die beiden metallischen Leiter 20, 30 aufgedruckt, getrocknet und eingebrannt. Wichtig hierbei ist, dass die Sintertemperatur für die beiden Leiter 20, 30 unterhalb der Sintertemperatur für das Einbrennen der Isolierschicht 70 liegt.

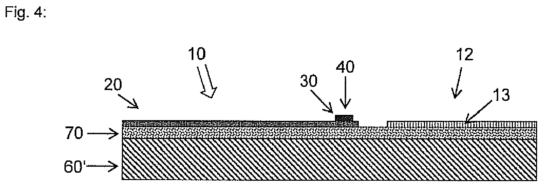

Fig. 4 zeigt den schematischen Teil-Querschnitt eines erfindungsgemäßen Thermolements 10 mit einer Dickschichtheizung 12. Die Dickschichtheizung 12 wird gewöhnlich zum Beheizen einer (nicht dargestellten) Heißkanaldüse verwendet. Sie hat eine rohrförmige Trägerhülse 60', auf dem in Dickschichttechnik eine Isolierschicht 70 aufgebracht ist. Auf dieser sind ebenfalls in Dickschichttechnik Widerstandsbahnen 13 ausgebildet, die in einem definierten Muster angeordnet sind, um die in der Heißkanaldüse geführte Schmelze über die gesamte Länge der Düse auf einer möglichst gleichmäßigen Temperatur zu halten.

Neben den Widerstandsbahnen 13 der Dickschichtheizung 12 sind auf der Isolierschicht 70 die metallischen Leiter 20, 30 in Dickschichttechnik aufgebracht. Letzter liegen damit in der gleichen Ebene wie die Widerstandsbahnen 13, so dass sich die Bauhöhe der Dickschichtheizung 12 durch das Aufbringen der metallischen Leiter 20, 30 nicht vergrößert. Man erkennt, dass die Trägerhülse 60' zusammen mit der Isolierschicht 70 den Träger und mithin das Substrat für das Thermoelement 10 bilden. Weil die Leiter 20, 30 und die Dickschichtheizung 12 integriert sind, müssen sie nicht in einem separaten Fertigungs- oder Montageschritt als separates Bauteil an der Dickschichtheizung 12 befestigt werden.

Die Heißkanaldüse hat gewöhnlich ein (nicht gezeigtes) Materialrohr, auf dessen Außenumfang die Trägerhülse 60' der Dickschichtheizung 12 aufgeschoben ist. Alternativ ist es aber auch möglich, die Isolierschicht 70 und die Widerstandsbahnen der Dickschichtheizung 12 unmittelbar auf dem Materialrohr aufzubringen. Das gleiche gilt entsprechend für die metallischen Leiter 20, 30.

Das Herstellen der Siebdruckpasten sowie das Aufdrucken der einzelnen Schichten und das anschließende Trocknen und Sintern erfolgt wie bereits oben beschrieben.

Eine wichtige Option bei dieser Ausführungsform besteht jedoch darin, dass die Widerstandsbahnen 13 der Dickschichtheizung 12 und die metallischen Leiter 20, 30 gleichzeitig oder nacheinander gedruckt und gesintert werden können. Werden die Widerstandbahnen 13 und die metallischen Leiter 20, 30 nacheinander gesintert, besteht die Möglichkeit, die metallischen Leiter 20, 30 bei einer höheren Temperatur einzubrennen als die Widerstandsbahnen 13 und umgekehrt. Damit können auch Legierungen für die Leiter 20, 30 zum Einsatz kommen, die deutlich höhere Einbrenntemperaturen benötigen als die Widerstandsbahnen 13 der Dickschichtheizung 12. Möglich ist auch, durch höhere Einbrenntemperaturen für die Leiter 20, 30 deren Einbrennzeit zu verringern. In jedem dieser Fälle hat dann der Prozess der Ausbildung der metallischen Leiter 20, 30 für das Thermoelement 10 keinen Einfluss mehr auf den Fertigungsprozess der Dickschichtheizung 12, insbesondere der Widerstandsbahnen 13.

Besteht die Trägerhülse 60' aus einem nicht leitenden Material, beispielsweise aus Aluminiumoxid, Zirkonoxid, Siliziumnitrit oder einer andere Keramik, können die metallischen Leiter 20, 30 für das Thermoelement 10 und die Widerstandsbahnen 13 für das Heizelement 12 direkt auf die Trägerhülse 60' aufgebracht werden. Besteht diese hingegen aus einem metallischen Material, so wird zunächst die Isolierschicht 70 aufgebracht und eingebrannt.

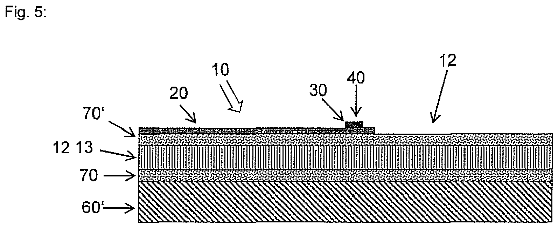

Fig. 5 zeigt schematisch eine andere Ausführungsform der schichtweisen Ausbildung des erfindungsgemäßen Thermoelements 10 für eine Heißkanaldüse.

Auf der meist aus einer Stahllegierung gefertigten Trägerhülse 60' ist zunächst die Isolierschicht 70 in Dickschichttechnik aufgebracht. Diese trägt ebenfalls in Dickschichttechnik ausgebildete Widerstandsbahnen 13, die in einem definierten Muster angeordnet sind, um die in der Heißkanaldüse geführte Schmelze über die gesamte Länge der Düse auf einer möglichst gleichmäßigen Temperatur zu halten. Über den Widerstandsbahnen 13 der Dickschichtheizung 12 ist eine weitere Isolierschicht 70' aufgebracht, die gleichfalls in Dickschichttechnik ausgeführt ist. Über dieser weiteren Isolierschicht 70' befinden sich die metallischen Leiter 20, 30, die sich in dem Messpunkt 40 überlappen.

Zur Herstellung einer solchen Anordnung wird zuerst die Dickschichtheizung 12 in Dickschichttechnologie auf die Trägerhülse 60' aufgebracht und mittels eines Sinterprozessschritts eingebrannt. Anschließend wird der Schichtaufbau mit der weiteren Isolierschicht 70' versehen. Danach werden die beiden Leiter 20, 30 aufgedruckt und ebenfalls in einem Sinterprozessschritt auf der weiteren Isolierschicht 70' über der Dickschichtheizung 12 eingebrannt. Dabei ist zu beachten, dass die Sintertemperatur für die Heizung 12 höher sein muss, als für die beiden Leiter 20, 30, die das erfindungsgemäße Thermoelement 10 bilden. Die Trägerhülse 60' kann auch hier bereits das Materialrohr einer Heißkanaldüse sein, d.h. die Dickschichtheizung 12 und das Thermoelement 10 sind integraler Bestandteil der Heißkanaldüse.

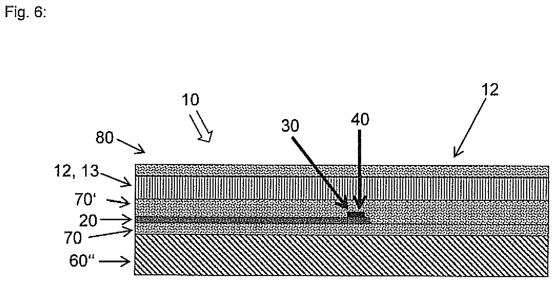

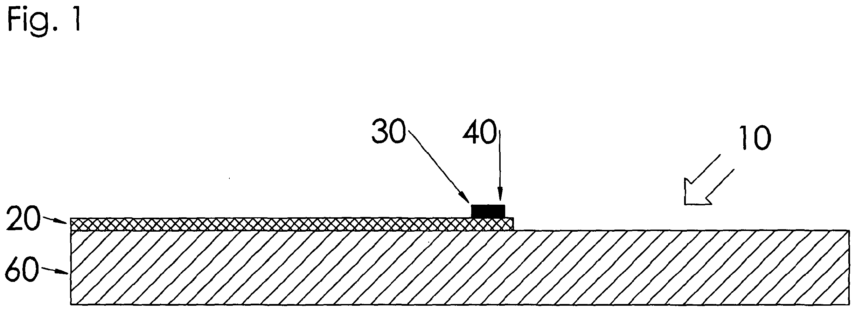

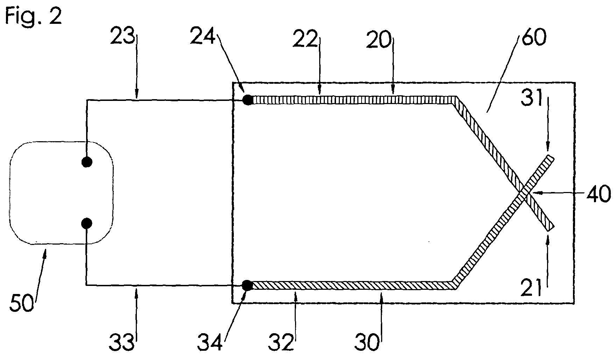

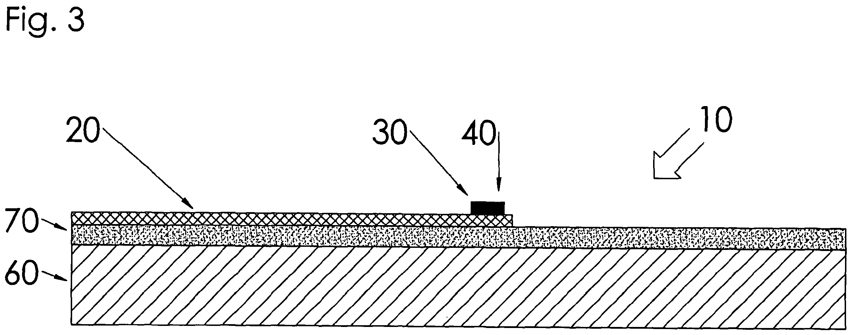

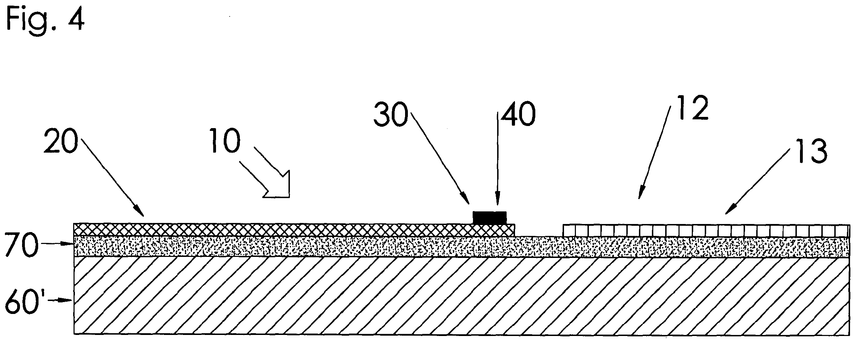

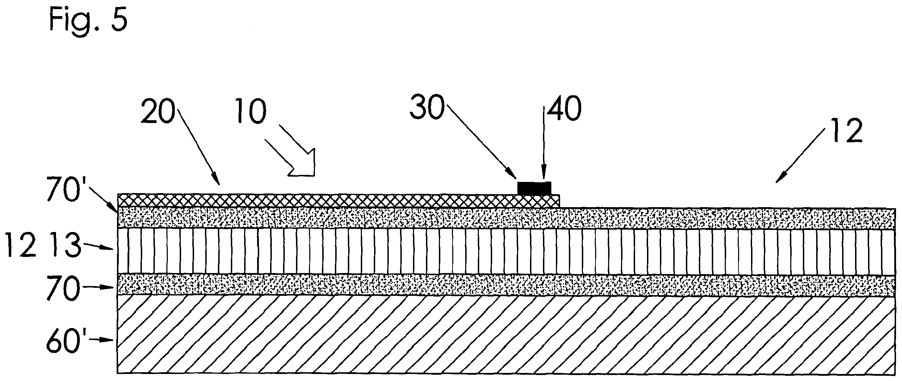

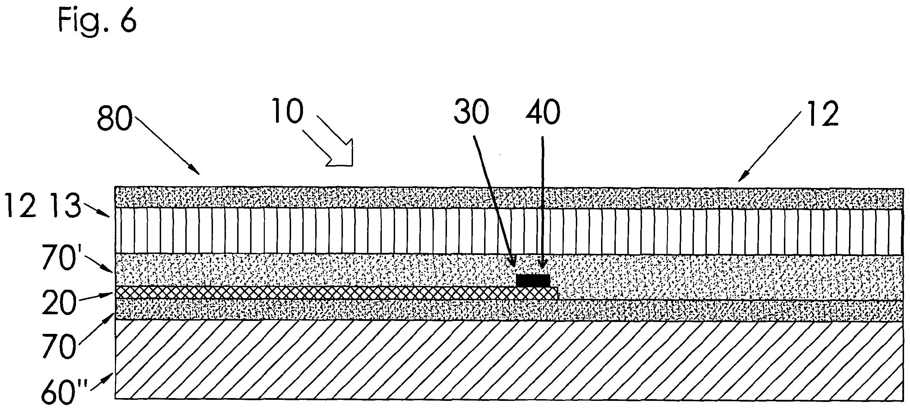

Fig. 6 zeigt einen schematischen Teil-Querschnitt einer (nicht näher bezeichneten) Heißkanaldüse mit einem Materialrohr 60" und einem erfindungsgemäßen Thermoelement 10. Das Materialrohr 60" der Heißkanaldüse trägt zunächst eine Isolierschicht 70, vorzugsweise eine Dielektrikumsschicht, auf der unmittelbar die metallischen Leiter 20, 30 sind. Letztere werden von einer weiteren Isolierschicht 70' abgedeckt und isoliert, um auf dieser die elektrisch leitfähigen Widerstandsbahnen 13 einer Dickschichtheizung 12 aufbringen zu können.

In diesem Ausführungsbeispiel sind mithin die Widerstandsbahnen 13 der Dickschichtheizung 12 über den metallischen Leitern 20, 30 angeordnet. Dadurch ist es möglich, Legierungen für die metallischen Leiter 20, 30 zu verwenden, die höhere Einbrenntemperaturen benötigen als die Widerstandsbahnen 13. Ebenso sind höhere Einbrenntemperaturen einsetzbar, um die Einbrennzeiten zu verringern.

Alternativ kann man die metallischen Leiter 20, 30 auch hier über den Widerstandsbahnen 13 ausbilden.

Sämtliche Schichten dieser Ausführungsformen sind in Dickschichttechnik ausgeführt, so dass die Außenabmessungen des Materialrohrs 60" der Heißkanaldüse durch die Dickschichtheizung 12 und die Leiter 20, 30 nur unwesentlich vergrößert werden.

Um sowohl die Dickschichtheizung 12 als auch die Leiter 20, 30 vor äußeren Einflüssen zu schützen und zu isolieren, ist abschließend in Dickschichttechnik eine Abdeckschicht 80 oberhalb der Heizung 12 vorgesehen. Dies schützt den Schichtaufbau vor Verkratzen, Korrosion oder sonstigen schädlichen Umwelteinflüssen. Zudem wirkt diese abschließende Abdeckschicht 80 auch als thermische Isolation nach außen.

Diese Abdeckschicht 80 ist vorteilhafterweise ein Glas, wobei das Glas sowohl ein Quarzglas, ein Borsilikatglas, ein Kronglas, ein Kalk-Natron-Glas, ein Floatglas, ein Flintglas usw. sein kann, welches gegebenenfalls unterschiedliche Zuschlagstoffe, wie z.B. Zinkoxid, Boroxid oder Aluminiumoxid und/oder weitere Zusatzstoffe wie z.B. Eisenoxide, Kupferoxide, Cobaltoxide, Chromoxid, Uranoxid, Nickeloxid, Selenoxid und/oder Mangan(IV)oxid enthalten kann. Diese Abdeckschicht 80 hat die Aufgabe, die Leiter vor Korrosion und sonstigen Beschädigungen oder schädlichen Umwelteinflüssen zu schützen.

Die Abdeckschicht 80 wird ebenso wie alle anderen Schichten mittels Siebdruck aufgebracht. Dazu wird eine Siebdruckpaste aus dem Material, aus dem die Abdeckschicht bestehen soll, angefertigt und mittels Siebdruck auf den ersten und zweiten Leiter, zumindest partiell, aufgedruckt. Alternativ ist es auch möglich, die Abdeckschicht auf eine aufliegende Heizung oder eine Isolierschicht aufzudrucken.

Nach einem möglichen Trocknungsschritt wird die Abdeckschicht 80 nach dem Aufbringen gesintert. Dadurch wird die Abdeckschicht 80 auf die schon vorhandenen Schichten eingebrannt und kann diese vor äußeren Einflüssen schützen und eventuell als eine zusätzliche Isolierschicht wirken. Abschließend wird bei einer Temperatur von mindestens 450 °C gesintert, bevorzugt bei einer Temperatur von 500 °C bis 580 °C und besonders bevorzugt bei einer Temperatur von 525 °C bis 560 °C. Um die eventuell nicht abgedeckten Leiter 20, 30 vor Oxidation zu schützen, wird vorteilhafterweise unter Schutzgasatmosphäre gesintert. Es können auch Gläser zum Einsatz kommen, die eine wesentlich höhere Einbrenntemperatur benötigen. Um die Abdeckschicht 80 auf dem Substrat, dem Leiter, der Heizung oder der Isolierschicht einzubrennen, schließt sich ein letzter und sehr kurz gehaltener Sintervorgang an. Die Abdeckschicht 80 wird dazu über einen Zeitraum von 7 bis 12 min gesintert, bevorzugt für einen Zeitraum von 10 min, um so eine eventuelle Beschädigung der schon aufgebrachten und eingebrannten Schichten zu verhindern.

Die Erfindung ist nicht auf eine der vorbeschriebenen Ausführungsformen beschränkt, sondern in vielfältiger Weise abwandelbar. So können die metallischen Leiter 20, 30 auch aus anderen Legierungskombinationen bestehen. Beispielsweise können die Leiter 20, 30 in einer Ausführungsform aus ISA MINUS® und ISA PLUS®, ISATHERM MINUS® und ISATHERM PLUS® oder ISATHERM MINUS® und ISA PLUS® bestehen. Die Bezeichnungen der oben genannten Legierungen sind Markennamen der Isabellenhütte Heusler GmbH & Co KG, Dillenburg, Germany.

In den oben aufgeführten Legierungen könnte optional auch Silizium mit Germanium substituiert werden, oder Mangan mit Rhenium, da diese vergleichbare chemische Eigenschaften besitzen. Durch einen gezielten Kontakt der metallischen Leiter 20, 30 zu einem metallisch leitenden Substrat ist es möglich, das Thermoelement 10 elektrisch zu erden. Der Kontakt kann entweder dadurch erreicht werden, dass innerhalb der Isolierschicht 70 ein Durchbruch vorhanden ist oder durch eine Überstand der metallischen Leiter 20, 30 über die Dielektrikumsschicht hinaus auf das Substrat 60.

Als Verfahren der Dickschichttechnik können - wie oben dargestellt - der Siebdruck, das thermische Spritzen, der Tampondruck, das Lasersintern oder das Aerosoldrucken verwendet werden.

Die wesentlichen Vorteile der Erfindung stellen sich wie folgt dar:
▪ Kaum auf das Messobjekt aufbauende Geometrie (nur wenige Mikrometer);
Dennoch mechanisch so stabil wie das Substrat auf das es gedruckt wird;
▪ Geringe thermische Masse, somit extrem schnelle Ansprechzeit;
▪ Bei Integration in einen Dickschichtheizer keine zusätzliche Baugruppe;
▪ DIN-Konformes bzw. ähnliches Messsignal (Abweichung kleiner +/-5%);
▪ Kleiner, klar definierter Messpunkt (vor allem bei Heizern mit inhomogener Leistungs- bzw.Temperaturverteilung vorteilhaft).

**Bezugszeichenliste**

| | | | |
|---|---|---|---|
| 10 | Thermoelement | 31 | Zweites Ende |
| 11 | Heizung | 32 | Zweite Anschlussstelle |
| 12 | Dickschichtheizung | 33 | Zweite Anschlussleitung |
| 13 | Widerstandsbahnen | 34 | Zweite Kontaktstelle |
| 14 | Schlitze | 35 | Zweiter Leiter mit weitere Messstelle |
| 15 | Nuten | 40 | Messstelle |
| 20 | Erster Leiter | 50 | Regelgerät |
| 21 | Erstes Ende | 60 | Substrat |
| 22 | Erste Anschlussstelle | 60' | Trägerhülse |
| 23 | Erste Anschlussleitung | 70 | Isolierschicht |
| 24 | Erste Kontaktstelle | 70' | weitere Isolierschicht |
| 25 | Erster Leiter mit weiterer Messstelle | 80 | Abdeckschicht |
| 30 | Zweiter Leiter | | |

## Patentansprüche

1. Thermoelement (10) zur Erfassung der Temperatur an einer Messstelle (40), mit einem ersten Leiter (20), der ein erstes Ende (21) und ein erstes Anschlussende (22) aufweist, und mit einem zweiten Leiter (30), der ein zweites Ende (31) und ein zweites Anschlussende (32) aufweist, wobei das erste Ende (21) des ersten Leiters (20) und das zweite Ende (31) des zweiten Leiters (30) an der Messstelle (40) elektrisch miteinander kontaktiert sind, und wobei das erste Anschlussende (22) des ersten Leiters (20) und das zweite Anschlussende (32) des zweiten Leiters (30) jeweils mit einer Anschlussleitung (23, 33) verbindbar ist, wobei der erste Leiter (20) und der zweite Leiter (30) in Dickschichttechnik auf einem Substrat (60) aufgebracht sind, wobei sich das erste Ende (21) des ersten Leiters (20) und das zweite Ende (31) des zweiten Leiters (30) an der Messstelle (40) zumindest abschnittsweise überlappen, **dadurch gekennzeichnet, dass** der erste Leiter (20) einen positiven Kontakt bildet und aus einer Legierung bestehend aus 80 bis 95 % Ni, 3 bis 20 % Cr, 0 bis 1 % Fe und 0 bis 1 % Si gefertigt ist, dass der zweite Leiter (30) einen negativen Kontakt bildet und aus einer Legierung bestehend aus 40 bis 58 % Cu, 40 bis 50 % Ni, 1 bis 5 % Mn und 1 bis 5 % Fe gefertigt ist, dass auf dem Substrat (60) eine Heizung in Dickschichttechnologie aufgebracht ist, und das Substrat (60) aus einem wärmeleitfähigen Material gefertigt ist.

2. Thermoelement (10) nach Anspruch 1, **dadurch gekennzeichnet, dass** zwischen dem Substrat (60) und den Leitern (20, 30) eine elektrische Isolierschicht (70) angeordnet ist.

3. Thermoelement (10) nach einem der vorhergehenden Ansprüche, **dadurch gekennzeichnet, dass** über den Leitern (20, 30) und der Isolierschicht (70) zumindest abschnittsweise eine Abdeckschicht (80) aufgebracht ist.

4. Thermoelement (10) nach einem der vorhergehenden Ansprüche, **dadurch gekennzeichnet, dass** das Substrat (60) ein Trägerelement ist oder bildet.

5. Thermoelement nach einem der vorhergehenden Ansprüche, **dadurch gekennzeichnet, dass** das Substrat (60) Teil einer Heißkanaldüse (90) ist.

6. Heißkanaldüse (90) mit einem Thermoelement (10) gemäß einem der Ansprüche 1 bis 4.

7. Thermoelement (10) nach einem der Ansprüche 1 bis 5, oder Heißkanaldüse (90) nach Anspruch 6, **dadurch gekennzeichnet, dass** die Heizung eine Dickschichtheizung (12) mit Widerstandsbahnen (13) ist.

8. Heißkanaldüse nach Anspruch 7, **dadurch gekennzeichnet, dass** de Leiter (20, 30) über den Widerstandsbahnen (13), unter den Widerstandsbahnen (13) oder in der gleichen Ebene wie die Widerstandsbahnen (13) angeordnet ist.

9. Heißkanaldüse nach Anspruch 8, **dadurch gekennzeichnet, dass** zwischen den Widerstandsbahnen (13) der Heizung und dem Thermoelement (10) eine Isolierschicht (70') vorgesehen ist.

10. Heißkanaldüse nach einem der Ansprüche 7 bis 9, **dadurch gekennzeichnet, dass** über der Heizung eine Abdeckschicht (80) vorgesehen ist.

11. Thermoelement (10) nach Anspruch 7, **dadurch gekennzeichnet, dass** die Leiter (20, 30) und die Widerstandsbahnen (13) durch mechanische Schlitze oder Nuten voneinander getrennt sind.

## Claims

1. Thermocouple (10) for sensing the temperature at a measurement point (40), comprising a first conductor (20) that has a first end (21) and a first terminal end (22), and second conductor (30) that has a second end (31) and a second terminal end (32), wherein the first end (21) of the first conductor (20) and the second end (31) of the second conductor (30) are in electric contact with one another at the measurement point (40), and wherein the first terminal end (22) of the first conductor (20) and the second terminal end (32) of the second conductor (30) in each case can be connected to a terminal line (23, 33), wherein the first conductor (20) and the second conductor (30) are applied to a substrate (60) using thick-film technology, wherein the first end (21) of the first conductor (20) and the second end (31) of the second conductor (30) overlap in at least some sections at the measurement point (40), **characterised in that** the first conductor (20) forms a positive contact and is made from an alloy consisting of 80 to 95% Ni, 3 to 20% Cr, 0 to 1% Fe and 0 to 1% Si, that the second conductor (30) forms a negative contact and is made from an alloy consisting of 40 to 58% Cu, 40 to 50% Ni, 1 to 5% Mn and 1 to 5% Fe, that a heating means is applied to the substrate (60) using thick-film technology, and the substrate (60) is made from a thermally conductive material.

2. Thermocouple (10) according to claim 1, **characterised in that** an electrically insulating layer (70) is arranged between the substrate (60) and the conductors (20, 30).

3. Thermocouple (10) according to any one of the preceding claims, **characterised in that** at least in some sections a cover layer (80) is applied over the conductors (20, 30) and the insulating layer (70).

4. Thermocouple (10) according to any one of the preceding claims, **characterised in that** the substrate (60) is or forms a carrier element.

5. Thermocouple according to any one of the preceding claims, **characterised in that** the substrate (60) is part of a hot channel nozzle (90).

6. Hot channel nozzle (90) having a thermocouple (10) according to any one of claims 1 to 4.

7. Thermocouple (10) according to any one of claims 1 to 5, or hot channel nozzle (90) according to claim 6, **characterised in that** the heating means is a thick-film heating means (12) with resistance tracks (13).

8. Hot channel nozzle according to claim 7, **characterised in that** the conductor (20, 30) is arranged above the resistance tracks (13), under the resistance tracks (13) in the same plane as the resistance tracks (13).

9. Hot channel nozzle according to claim 8, **characterised in that** an insulating layer (70') is provided between the resistance tracks (13) of the heating means and the thermocouple (10).

10. Hot channel nozzle according to any one of claims 7 to 9, **characterised in that** a cover layer (80) is provided above the heating means.

11. Thermocouple (10) according to claim 7, **characterised in that** the conductors (20, 30) and the resistance tracks (13) are separated from one another by mechanical slots or grooves.

## Revendications

1. Thermoélément (10) servant à détecter la température au niveau d'un emplacement de mesure (40), avec un premier conducteur (20), qui présente une première extrémité (21) et une première extrémité de raccordement (22), et avec un deuxième conducteur (30), qui présente une deuxième extrémité (31) et une deuxième extrémité de raccordement (32), dans lequel la première extrémité (21) du premier conducteur (20) et la deuxième extrémité (31) du deuxième conducteur (30) sont en contact électrique l'une avec l'autre au niveau de l'emplacement de mesure (40), et dans lequel la première extrémité de raccordement (22) du premier conducteur (20) et la deuxième extrémité de raccordement (32) du deuxième conducteur (30) peuvent être reliées respectivement à un conduit de raccordement (23, 33), dans lequel le premier conducteur (20) et le deuxième conducteur (30) sont appliqués selon une technique de couches épaisses sur un substrat (60), dans lequel la première extrémité (21) du premier conducteur (20) et la deuxième extrémité (31) du deuxième conducteur (30) se chevauchent au moins par endroits au niveau de l'emplacement de mesure (40), **caractérisé en ce que** le premier conducteur (20) forme un contact positif et est fabriqué à partir d'un alliage constitué de 80 à 95 % de Ni, 3 à 20 % de Cr, 0 à 1 % de Fe et 0 à 1 % de Si, que
le deuxième conducteur (30) forme un contact négatif et est fabriqué à partir d'un alliage constitué de 40 à 58 % de Cu, 40 à 50 % de Ni, 1 à 5 % de Mn et 1 à 5 % de Fe, que
un système de chauffage est appliqué selon la technique de couches épaisses sur le substrat (60), et
le substrat (60) est fabriqué à partir d'un matériau thermoconducteur.

2. Thermoélément (10) selon la revendication 1, **caractérisé en ce qu'**une couche isolante (70) électrique est disposée entre le substrat (60) et les conducteurs (20, 30).

3. Thermoélément (10) selon l'une quelconque des revendications précédentes, **caractérisé en ce qu'**une couche de recouvrement (80) est appliquée au moins par endroits au-dessus des conducteurs (20, 30) et de la couche isolante (70).

4. Thermoélément (10) selon l'une quelconque des revendications précédentes, **caractérisé en ce que** le substrat (60) est ou forme un élément de support.

5. Thermoélément selon l'une quelconque des revendications précédentes, **caractérisé en ce que** le substrat (60) est une partie d'une buse à canal chaud (90).

6. Buse à canal chaud (90) avec un thermoélément (10) selon l'une quelconque des revendications 1 à 4.

7. Thermoélément (10) selon l'une quelconque des revendications 1 à 5, ou buse à canal chaud (90) selon la revendication 6, **caractérisé en ce que** le système de chauffage est un système de chauffage de couches épaisses (12) avec des pistes de résistance (13).

8. Buse à canal chaud selon la revendication 7, **caractérisée en ce que** le conducteur (20, 30) est disposé au-dessus des pistes de résistance (13), sous les pistes de résistance (13) ou sur le même plan que les pistes de résistance (13).

9. Buse à canal chaud selon la revendication 8, **caractérisée en ce qu'**une couche isolante (70') est prévue entre les pistes de résistance (13) du système de chauffage et le thermoélément (10).

10. Buse à canal chaud selon l'une quelconque des revendications 7 à 9, **caractérisée en ce qu'**une couche de recouvrement (80) est prévue au-dessus du système de chauffage.

11. Thermoélément (10) selon la revendication 7, **caractérisé en ce que** le conducteur (20, 30) et les pistes de résistance (13) sont séparés les uns des autres par des entailles ou rainures mécaniques.
